Europäisches Patentamt

European Patent Office

Office européen des brevets

(11) Publication number: **0 118 720**
A2

# (12) EUROPEAN PATENT APPLICATION

(21) Application number: 84101023.4

(22) Date of filing: 08.03.82

(51) Int. Cl.³: **F 24 J 3/00**

(30) Priority: 24.08.81 JP 125525/81 U

(43) Date of publication of application:
19.09.84 Bulletin 84/38

(84) Designated Contracting States:
DE FR GB NL SE

(60) Publication number of the earlier application
in accordance with Art. 76 EPC: 0 073 836

(71) Applicant: KUBOTA LTD.
2-47, Shikitsuhigashi 1-chome
Naniwa-ku Osaka 556(JP)

(72) Inventor: Yano, Naomichi
Kubota Ltd. 2-47, Shikitsuhigashi 1-chome
Naniwa-ku Osaka-shi Osaka 556(JP)

(72) Inventor: Makito, Isao
Kubota Ltd. 2-47, Shikitsuhigashi 1-chome
Naniwa-ku Osaka-shi Osaka 556(JP)

(72) Inventor: Ito, Hajime
Kubota Ltd. 2-47 Shikitsuhigashi 1-chome
Naniwa-ku Osaka-shi Osaka 556(JP)

(72) Inventor: Tanaka, Shigeru
Kubota Ltd. 2-47, Shikitsuhigashi-1-chome
Naniwa-ku Osaka-shi Osaka 556(JP)

(72) Inventor: Okumura, Toshikazu
Kubota Ltd. 2-47, Shikitsuhigashi 1-chome
Naniwa-ku Osaka-shi Osaka 556(JP)

(74) Representative: MacFarlane, John Anthony
Christopher et al,
HASELTINE LAKE & CO. Hazlitt House 28, Southampton
Buildings Chancery Lane
London WC2A 1AT(GB)

(54) Heat accumulating material container.

(57) A heat accumulating medium enclosing container (3A)
has latent heat accumulating medium (3B) within a spherical
main body (301). A large number of heat transfer area
enlarging portions constituted by grooves (303) are provided
over the entire surface of the main body (301) to enlarge the
external heat transfer area of the container.

-1-

# HEAT ACCUMULATING MATERIAL CONTAINER

This invention relates to a heat accumulating material container.

Conventionally, a heat accumulating material container, as shown in Japanese Patent Kokai 55-84486, has many depressions on the surface. In use heat medium such as water tends to stay in the depressions and then heat transfer efficiency decreases.

According to the present invention there is provided a heat accumulating medium enclosing container having a latent heat accumulating medium within a spherical main body, characterised in that a large number of heat transfer area enlarging portions constituted by grooves are provided over the entire surface of the main body. In this container the latent heat accumulating material is confined within the main body, with the heat transfer area enlarging portions. By this arrangement, the heat transfer area on the external surface of the container is enlarged, and the thickness of the latent heat accumulating material is reduced, to provide a high heat transfer efficiency. As the heat transfer area enlarging means are grooves they can be formed during moulding of the spherical main body and there is thus no cost increase involved.

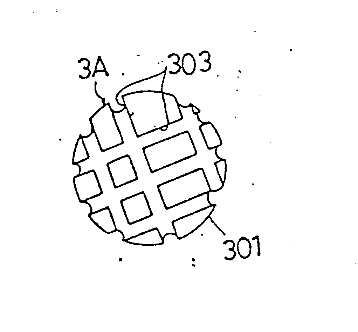

For a better understanding of the invention and to show how the same may be carried into effect, reference will now be made, by way of example, to the accompanying drawing, in which the single Figure is a front view of a heat accumulating material container.

In the Figure the container is a capsule 3A formed with a plurality of rows of grooves 303 in the outer periphery of the spherical main body 301 in parallel relation or in a crossed state over the entire surface of a spherical main body 301 as a heat transfer area enlarging means. These grooves 302 are formed each to the same depth and are directed towards the centre of the main body 301 but they are not necessarily centre-oriented or formed to the same depth. the main body 301 of the capsule 3A is made of a high density polyethylene and encloses therein a latent heat accumulating material such as $CaCl_2 \cdot 6H_2O$.

Owing to the arrangement as described above, the capsule 3A is increased in its surface area, while the contact area between heat exchanging medium such as water forming the surrounding atmosphere and the latent heat accumulating material 3B is increased, with simultaneous reduction of thickness of the heat accumulating member, and improvement of the heat transfer efficiency, there being a reduction of the distance between the heat conducting surface at the bottom portions of the grooves 303 and the centre of the spherical main body 301. Furthermore, even when some of the grooces 302 are blocked through contact of the capsule with neighbouring capsules, remaining grooves still serve for improvement of the heat transfer efficiency and heat exchange at a high efficiency is effected at all times, since the heat exchange medium flows through the grooves 303.

CLAIM

1. A heat accumulating medium enclosing container (3A) having a latent heat accumulating medium (3B) within a spherical main body (301), characterised in that a large number of heat transfer area enlarging portions constituted by grooves (303) are provided over the entire surface of the main body (301).

3A    303

301